# EUROPÄISCHE PATENTSCHRIFT

(11) **EP 1 224 520 B1**
(45) Veröffentlichungstag und Bekanntmachung des Hinweises auf die Patenterteilung: **09.06.2004**
(21) Anmeldenummer: 00984847.4
(22) Anmeldetag: 21.10.2000
(51) Int. Cl.: G06F 1/16, G07G 1/00, G06F 1/18

(54) **BILDSCHIRMARBEITSPLATZ FÜR TISCH- UND WANDMONTAGE**
TABLE- OR WALL-MOUNTED VIDEO WORKSTATION
POSTE DE TRAVAIL SOUS FORME D'ECRAN POUR MONTAGE SUR TABLE OU AU MUR

(30) Priorität: 29.10.1999 DE 19952400
(43) Veröffentlichungstag der Anmeldung: 24.07.2002
(73) Patentinhaber: Wincor Nixdorf International GmbH, 33106 Paderborn (DE)
(72) Erfinder: BAITZ, Guenter, 13629 Berlin (DE); KAMIN, Hartmut, 10585 Berlin (DE)
(86) Internationale Anmeldenummer: PCT/DE2000/003712
(87) Internationale Veröffentlichungsnummer: WO 2001/033321

(56) Entgegenhaltungen:
- EP-A- 0 394 879
- US-A- 5 249 103
- US-A- 5 668 570
- US-A- 5 673 169

## Beschreibung

Die Erfindung betrifft einen Bildschirmarbeitsplatz für Tisch- und Wandmontage entsprechend dem Oberbegriff des Anspruchs 1.

Eine Elektronikbox und ein Sichtgerät umfassende Bildschirmarbeitsplätze sind allgemein bekannt. Dabei handelt es sich bei der Elektronikbox und dem Sichtgerät jeweils um autarke Geräte. Als Sichtgeräte werden vermehrt solche mit Flachbildschirm eingesetzt. Diese haben den Vorteil einer geringen Bautiefe, haben aber gerade deshalb keinen stabilen Stand. Sie müssen darum mit einem relativ großflächigen Gerätefuß versehen sein oder an einem Stativ befestigt werden. Aus Platzgründen wird das Sichtgerät dabei häufig auf die Elektronikbox gestellt. Dies mag für die Benutzung des Bildschirmarbeitsplatzes als Auftischgerät genügen, nicht aber, wenn der Bildschirmarbeitsplatz als Wandgerät betrieben werden soll.

US 5 673 162 A offenbart einen Bildschirmarbeitsplitz gemäß dem Oberbegriff des Anspruchs 1.

Aufgabe der Erfindung ist es daher, einen Bildschirmarbeitsplatz vorzuschlagen, der sowohl als Auftischgerät wie auch als Wandgerät betrieben werden kann, wobei ein in die Vorderwand der Elektronikbox eingebautes Bedienelement im ersten Fall von vorne und im zweiten Fall von oben zugänglich sein soll.

Die Aufgabe wird durch die Merkmale des Anspruchs 1 gelöst.

Die Erfindung geht von der Überlegung aus, daß ein Bildschirmarbeitsplatz dann sowohl für die Aufstellung auf einer horizontalen Fläche, insbesondere auf einem Tisch, als auch für die Wandmontage geeignet ist, wenn an der Elektronikbox ein deren Deckseite überragender Halter angeordnet ist, an dem das Sichtgerät um eine vertikale Achse um 180° drehbar befestigt und um eine horizontale Achse schwenkbar gehalten ist.

Für die Aufstellung des Bildschirmarbeitsplatzes auf einer horizontalen Fläche wird das Sichtgerät so gedreht, daß seine Anzeigeseite zur Vorderwand der Elektronikbox weist. Bei Wandmontage des Bildschirmarbeitsplatzes wird die Elektronikbox mit ihrer Unterseite zur Wand weisend und mit nach oben gerichteter Vorderwand an der Wand befestigt, nachdem das Sichtgerät um 180° gedreht worden ist, dessen Anzeigeseite also zur Rückwand der Elektronikbox weist.

Vorzugsweise ist der Halter auf der Deckseite, insbesondere dem Deckel der Elektronikbox angebracht. Für Servicezwecke muß der Deckel ohnehin von der Elektronikbox genommen werden, eine Demontage des Sichtgerätes erübrigt sich also im Servicefalle.

Entsprechend einer bevorzugten Ausbildung der Erfindung erstreckt sich der Halter auf der Deckseite im wesentlichen von der Vorderwand zur Rückwand der Elektronikbox. Die horizontale Achse durchsetzt dabei den Halter bei dessen der Vorderwand nahem Ende und verläuft parallel zu der Oberkante der Vorderwand der Elektronikbox. Bei dem der Rückwand nahen Ende des Halters ist eine Aufnahme für ein Peripheriegerät angeordnet.

Wird bei horizontaler Aufstellung des Bildschirmarbeitsplatzes eine Kundenanzeige an die Aufnahme angesetzt, ergibt sich beispielsweise eine vollwertige Registrierkasse. Dabei weist das Sichtgerät in Richtung der Vorderwand der Elektronikbox und damit zu einer Bedien- oder Kassierperson und die Kundenanzeige zur Rückwand der Elektronikbox und damit zu einem Kunden.

Bei vertikaler Anordnung an einer Wand wird beispielsweise ein Strichcodeleser an die Aufnahme angesetzt. Dadurch ist der Bildschirmarbeitsplatz als sogenannter Preis-Verifier einsetzbar - ein Gerät, mit dem ein Kunde eines Warenhauses selbst den Preis eines nur mit einem Strichcode ausgezeichneten Artikels ermitteln kann. Das Sichtgerät befindet sich bei dieser Anordnung oberhalb der Elektronikbox und damit in Augenhöhe eines stehenden Kunden und der Strichcodeleser am unterem Ende der Elektronikbox, also in Handhöhe des Kunden. Dabei ist die Abtastrichtung des Strichcodelesers vorzugsweise nach unten gerichtet. Es ergibt sich also für beide Anwendungsfälle eine ergonomisch optimale Anordnung des Bildschirmarbeitsplatzes.

Das bzw. die Anschlußkabel des Sichtgerätes und/oder des Peripheriegerätes ist (sind) vorzugsweise in dem Halter geführt.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: einen Bildschirmarbeitsplatz als Auftischgerät in perspektivischer Ansicht,
- Fig. 2: den Bildschirmarbeitsplatz aus Fig. 1 in Seitenansicht,
- Fig. 3: einen Bildschirmarbeitsplatz als Wandgerät in Seitenansicht.

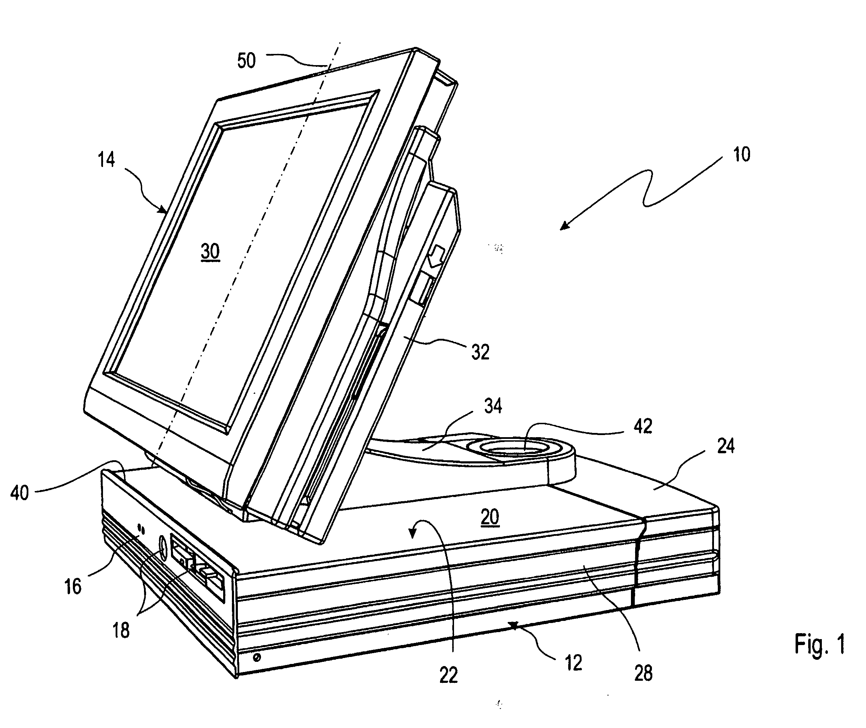

In Fig. 1 ist ein Bildschirmarbeitsplatz 10 als Auftischgerät dargestellt. Der Bildschirmarbeitsplatz 10 umfaßt eine Elektronikbox 12 und ein einen Flachbildschirm enthaltendes Sichtgerät 14. Die Elektronikbox 12 enthält eine PC-basierte, nicht dargestellte elektronische Steuereinrichtung und hat eine Vorderwand 16, in die verschiedene Bedienelemente 18 des PC eingebaut sind. Ferner weist die Elektronikbox 12 eine durch einen abnehmbaren Deckel 20 verschlossene Deckseite 22, eine von einer Abdeckhaube 24 überdeckte Rückwand 26 und Seitenwände 28 (nur die rechte Seitenwand ist in Fig. 1 zu sehen) auf. Das Sichtgerät 14 hat eine Anzeigeseite 30. An seiner rechten Seite ist ein Durchzug-Magnetkartenleser 32 lösbar befestigt.

An dem Deckel 20 ist ein Halter 34 befestigt, der sich auf der Deckseite 22 im wesentlichen von der Vorderwand 16 zur Rückwand 26 der Elektronikbox 12 erstreckt. An dem der Vorderwand 16 nahen Ende des Halters 34 befindet sich ein Drehgelenk 36, das der schwenkbaren Halterung des Sichtgerätes 14 an der Elektronikbox 12 dient. Das Sichtgerät 14 ist um eine den Halter 34 in dem Drehgelenk 36 durchsetzende horizontale Achse 38 in seiner Neigung gegenüber der Elektronikbox 12 verstellbar. Die horizontale Achse 38 verläuft bei dem der Vorderwand 16 nahen Ende des Halters 34 und parallel zu der Oberkante 40 der Vorderwand 16 der Elektronikbox 12. Bei dem der Rückwand 26 der Elektronikbox 12 nahen Ende des Halters 34 ist eine rohrförmige Aufnahme 42 für ein Peripheriegerät angeordnet.

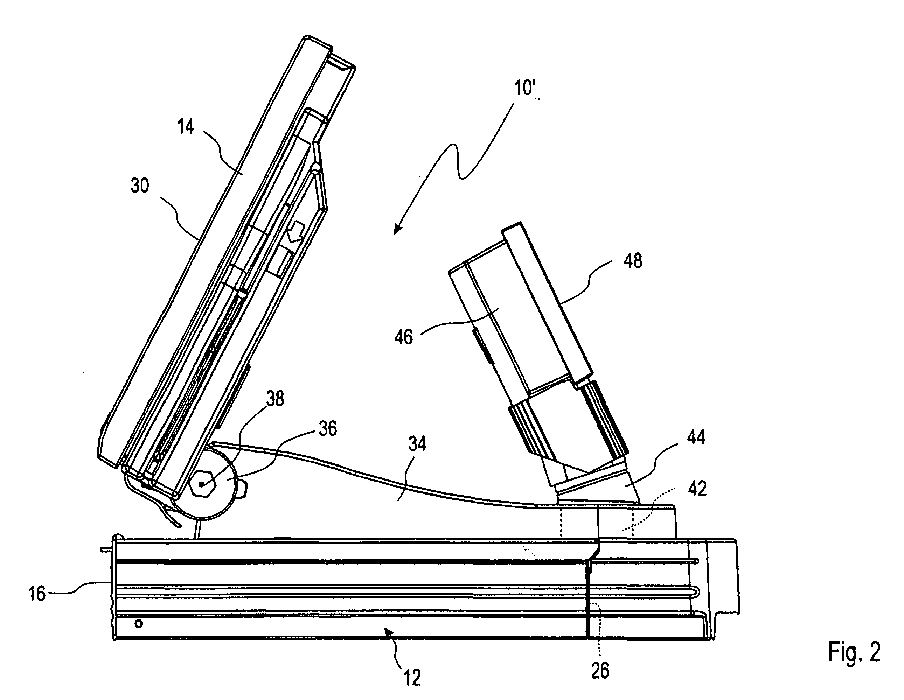

In Fig. 2 ist der Bildschirmarbeitsplatz 10 als Auftischgerät 10' dargestellt. In die Aufnahme 42 ist der Schaft 44 einer Kundenanzeige 46 so eingesetzt, daß deren Anzeigeseite 48 zur Rückwand 26 der Elektronikbox 12 weist. Das Auftischgerät 10' mag auf einer horizontalen Fläche, beispielsweise einem Tisch, so aufgestellt sein, daß das Sichtgerät 14 einer Bedien- oder Kassierperson und die Kundenanzeige 46 einem Kunden zugewandt ist. Damit kann das Tischgerät 10' beispielsweise als Registrierkasse eingesetzt werden.

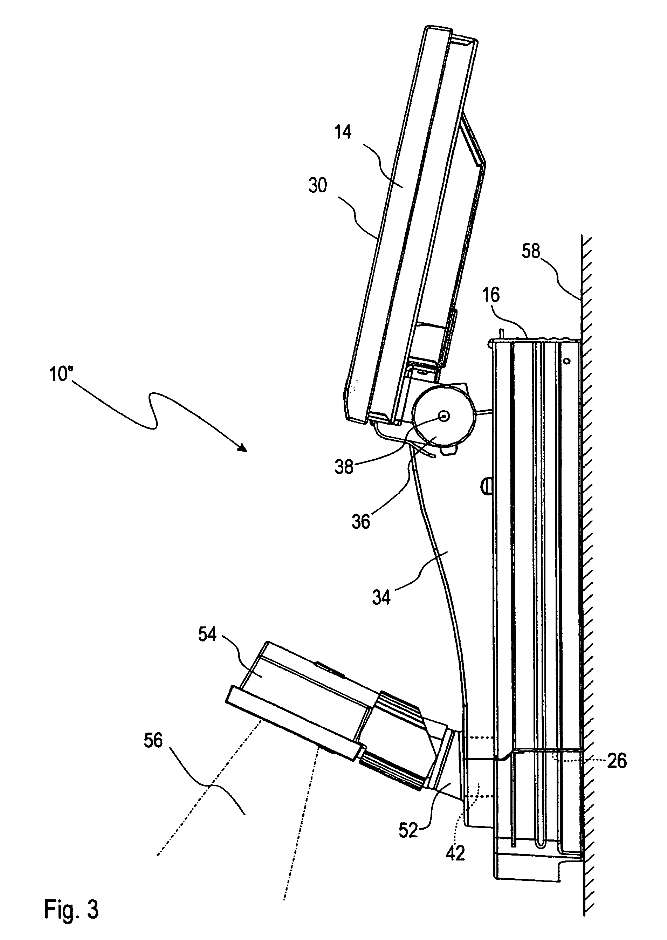

In Fig. 3 ist der Bildschirmarbeitsplatz 10 als Wandgerät 10" dargestellt. Das Sichtgerät 14 ist im Vergleich zu der Anordnung in den Figuren 1 und 2 um 180° um eine vertikale Achse 50 (Fig. 1) gedreht an das Drehgelenk 36 montiert, so daß die Anzeigeseite 30 des Sichtgerätes 14 zur Rückwand 26 der Elektronikbox 12 weist. In die Aufnahme 42 ist der Schaft 52 eines Strichcodelesers 54 so eingesetzt, daß dessen Abtaststrahl 56 in Richtung der Rückwand 26 der Elektronikbox 12 ausgerichtet ist. Das Wandgerät 10" ist so an einer Wand 58 anzubringen, daß das Sichtgerät 14 nach oben weist. Auf Grund der schwenkbaren Lagerung in dem Drehgelenk 36 kann die Neigung des Sichtgerätes 14 der Größe eines Benutzers angepaßt werden. Die Anordnung des Strichcodelesers 54 ist so gewählt, daß dessen Abtaststrahl 56 auf einen in den Händen des Benutzers gehaltenen Artikel fallen kann.

In der in Fig. 3 dargestellten Version ist der Bildschirmarbeitsplatz 10 als sogenannter Preis-Verifier einsetzbar. Ein Kunde eines Warenhauses, der den Preis eines nur mit einem Strichcode ausgezeichneten Artikels überprüfen möchte, hält letzteren in den Abtaststrahl 56 des Strichcodelesers 54, woraufhin wenigstens der Preis des Artikels in Klarschrift auf dem Sichtgerät 14 angezeigt wird.

Die (nicht sichtbaren) Anschlußkabel des Sichtgerätes 14 und/oder der Peripheriegeräte 46, 54 sind in dem Halter 34 und durch den Deckel 20 hindurch in die Elektronikbox 12 geführt, so daß sie den Benutzer nicht stören oder behindern können.

## Patentansprüche

1. Bildschirmarbeitsplatz (10) für Tisch- und Wandmontage mit einer Elektronikbox (12) und einem einen Flachbildschirm enthaltenden Sichtgerät (14), wobei
an der Elektronikbox (12) ein deren Deckseite (22) überragender Halter (34) angeordnet ist, an dem das Sichtgerät (14) um eine horizontale Achse (38) schwenkbar gehalten ist,
**dadurch gekennzeichnet,**
**daß** das Sichtgerät (14) um seine vertikale Achse (50) um 180° drehbar an dem Halter (34) befestigt ist.

2. Anordnung nach Anspruch 1, **dadurch gekennzeichnet, daß** der Halter (34) auf dem Deckel (20) der Elektronikbox (12) angebracht ist.

3. Anordnung nach Anspruch 1 oder 2, **dadurch gekennzeichnet, daß** die horizontale Achse (38) bei der Vorderwand (16) der Elektronikbox (12) und parallel zu deren Oberkante (40) verläuft.

4. Anordnung nach einem der Ansprüche 1 bis 3, **dadurch gekennzeichnet, daß** der Halter (34) sich auf der Deckseite (22) und im wesentlichen von der Vorderwand (16) zur Rückwand (26) der Elektronikbox (12) erstreckt, daß die horizontale Achse (38) den Halter (34) bei dessen der Vorderwand (16) nahem Ende durchsetzt und parallel zu der Oberkante (40) der Vorderwand (16) der Elektronikbox (12) verläuft und daß bei dem der Rückwand (26) nahen Ende des Halters (34) eine Aufnahme (42) für ein Peripheriegerät (46, 54) angeordnet ist.

5. Anordnung nach Anspruch 4, **dadurch gekennzeichnet, daß** eine Kundenanzeige (46) an die Aufnahme (42) angesetzt ist und daß die Anzeigeseite (30) des Sichtgerätes (14) in Richtung der vorderwand (16) der Elektronikbox (12) und die Anzeigeseite (48) der Kundenanzeige (46) zur Rückwand (26) der Elektronikbox (12) ausgerichtet ist.

6. Anordnung nach Anspruch 4, **dadurch gekennzeichnet, daß** ein Strichcodeleser (54) an die Aufnahme (42) angesetzt ist, daß sich bei Anbringung des Bildschirmarbeitsplatzes (10) an einer Wand (58) das Sichtgerät (14) oberhalb der Elektronikbox (12) und der Strichcodeleser (54) am unterem Ende der Elektronikbox (12) befindet und daß der Abtaststrahl (56) des Strichcodelesers (54) nach unten gerichtet ist.

7. Anordnung nach einem der Ansprüche 1 bis 6, **dadurch gekennzeichnet, daß** ein Anschlußkabel des Sichtgerätes (14) und/oder des Peripheriegerätes (46, 54) in dem Halter (34) geführt ist (sind).

## Claims

1. Table- or wall-mounted video workstation (10), having an electronic box (12) and a display device (14) which contains a flat screen, a holder (34) which projects beyond the cover side (22) of the electronic box (12) being arranged on said electronic box (12) and the display device (14) being secured to it so as to be pivotable about a horizontal axis (38), **characterized in that** the display device (14) is attached to the holder (34) so as to be rotatable through 180° about its vertical axis (50).

2. Arrangement according to Claim 1, **characterized in that** the holder (34) is provided on the lid (20) of the electronic box (12).

3. Arrangement according to Claim 1 or 2, **characterized in that** the horizontal axis (38) runs on the front wall (16) of the electronic box (12) and in parallel with its upper edge (40).

4. Arrangement according to one of Claims 1 to 3, **characterized in that** the holder (34) extends on the cover side (22) and essentially from the front wall (16) to the rear wall (26) of the electronic box (12), **in that** the horizontal axis (38) penetrates the holder (34) at its end near to the front wall (16) and runs in parallel with the upper edge (40) of the front wall (16) of the electronic box (12), and **in that** a receptacle (42) for a peripheral (46, 54) is arranged at the end of the holder (34) near to the rear wall (26).

5. Arrangement according to Claim 4, **characterized in that** a customer display (46) is fitted onto the receptacle (42), and **in that** the display sign (30) of the display device (14) is oriented in the direction of the front wall (16) of the electronic box (12), and the display side (48) of the customer display (46) oriented with respect to the rear wall (26) of the electronic box (12).

6. Arrangement according to Claim 4, **characterized in that** a bar code reader (54) is fitted onto the receptacle (42), **in that**, when the video workstation (10) is attached to a wall (58), the display device (14) is located above the electronic box (12), and the bar code reader (54) is located at the lower end of the electronic box (12), and **in that** the scanning beam (56) of the bar code reader (54) is directed downwards.

7. Arrangement according to one of Claims 1 to 6, **characterized in that** a connecting cable of the display device (14) and/or of the peripheral (46, 54) is/are guided in the holder (34).

## Revendications

1. Poste de travail à écran (10) à monter sur une table ou au mur, comportant un boîtier électronique (12) et une unité de visualisation (14) qui contient un écran plat, pour lequel on dispose sur le boîtier électronique (12) un support (34) qui dépasse de son côté supérieur (22) et auquel l'unité de visualisation (14) est maintenue de façon à pouvoir pivoter autour ,d'un axe horizontal (38), **caractérisé en ce que** l'unité de visualisation (14) est fixée au support (34) de façon à pouvoir tourner de 180° autour de son axe vertical (50).

2. Agencement selon la revendication 1, **caractérisé en ce que** le support (34) est monté sur le couvercle (20) du boîtier électronique (12).

3. Agencement selon la revendication 1 ou 2, **caractérisé en ce que** l'axe horizontal (38) s'étend vers la paroi avant (16) du boîtier électronique (12) et parallèlement à son bord supérieur (40).

4. Agencement selon l'une des revendications 1 à 3, **caractérisé en ce que** le support (34) s'étend sur le côté supérieur (22) et notamment de la paroi avant (16) jusqu'à la paroi arrière (26) du boîtier électronique (12), l'axe horizontal (38) traverse le support (34) vers son extrémité proche de la paroi avant (16) et s'étend parallèlement au bord supérieur (40) de la paroi avant (16) du boîtier électronique (12) et un logement (42) d'un périphérique (46, 54) est disposé vers l'extrémité - proche de la paroi arrière (26) - du support (34).

5. Agencement selon la revendication 4, **caractérisé en ce qu'**un affichage destiné au client (46) est placé sur le logement (42) et le côté d'affichage (30) de l'unité de visualisation (14) est tourné vers la paroi avant (16) du boîtier électronique (12) et le côté d'affichage (48) de l'affichage destiné au client (46) est tourné vers la paroi arrière (26) du boîtier électronique (12).

6. Agencement selon la revendication 4, **caractérisé en ce qu'**un lecteur de code à barres (54) est placé sur le logement (42), **en ce que**, quand on applique le poste de travail à écran (10) à un mur (58), l'unité de visualisation (14) se trouve au-dessus du boîtier électronique (12) et le lecteur de code à barres (54) à l'extrémité inférieure du boîtier électronique (12) et le faisceau de balayage (56) du lecteur de code à barres (54) est dirigé vers le bas.

7. Agencement selon l'une des revendications 1 à 6, **caractérisé en ce qu'**un câble de raccordement de l'unité de visualisation (14) et/ou du périphérique (46, 54) est passé (sont passés) dans le support (34).
